# EUROPÄISCHE PATENTANMELDUNG

(11) **EP 1 340 876 A1**
(43) Veröffentlichungstag der Anmeldung: **03.09.2003**
(21) Anmeldenummer: 02001554.1
(22) Anmeldetag: 23.01.2002
(51) Int. Cl.: E05D 13/00, F16F 1/12, F16F 3/04

(54) **Abstützelement für eine auf einer Welle angeordnete Torsionsfeder und Federanordnungen**

(71) Anmelder: Schroer, Bernt, Dr., 33442 Herzebrock-Clarholz (DE)
(72) Erfinder: Schroer, Bernt, Dr., 33442 Herzebrock-Clarholz (DE)
(74) Vertreter: Patentanwälte Rehberg + Hüppe

(57) **Zusammenfassung**

Ein Abstützelement (1) ist für eine auf einer Welle (8) angeordnete spiralförmige Torsionsfeder (11) vorgesehen, um die Torsionsfeder (11) an ihrem mit Abstand zu dem Außendurchmesser (10) der Welle (8) verlaufenden Innendurchmesser (12) abzustützen. Das Abstützelement (1) weist einen sich spiralförmig windenden Metalldraht (2) auf, der in mindestens zwei in der Haupterstreckungsrichtung der Welle (8) voneinander beabstandeten Führungsbereichen (4) einen auf den Außendurchmesser (10) der Welle (8) abgestimmten Windungsinnendurchmesser (6) ausbildet und in mindestens einem Abstützbereich (5) einen auf den Innendurchmesser (12) der Torsionsfeder (11) abgestimmten Windungsaußendurchmesser (7).

## Beschreibung

Die Erfindung bezieht sich auf ein Abstützelement für eine auf einer Welle angeordnete spiralförmige Torsionsfeder, um die Torsionsfeder an ihrem mit Abstand zu dem Außendurchmesser der Welle verlaufenden Innendurchmesser abzustützen. Weiterhin bezieht sich die Erfindung auf eine Vorform für ein solches Abstützelement und auf Federanordnungen mit einer Torsionsfeder und mit mindestens einem solchen Abstützelement.

Ein Hauptanwendungsbereich von spiralförmigen Torsionsfedern ist der Ausgleich von Gewichtskräften bei Sektionaltoren, die in immer stärkerem Umfang als Garagen- und Industrietoren Verwendung finden. Dabei stützt die jeweilige Torsionsfeder typischerweise die Welle drehelastisch ab, auf der sie angeordnet ist. Insbesondere bei größeren Torsionsfedern, d.h.

Torsionsfedern, die zur Aufnahme großer, über viele Umdrehungen der Welle hinweg zunehmender Drehmomente geeignet sind, ist der Innendurchmesser der Torsionsfeder typischerweise deutlich größer als der Außendurchmesser der Welle. Dies bedeutet, dass die Torsionsfeder durch die Welle, die typischerweise eine horizontale Orientierung aufweist, weder gegenüber Gewichtskräften, noch gegenüber den bei der Torsionsbeanspruchung der Torsionsfeder auftretenden inneren Kräfte abgestützt wird, solange die Torsionsfeder noch nicht stark deformiert ist. So können Verwerfungen der Torsionsfeder auftreten, die bei der Beanspruchung der Torsionsfeder um die Welle umlaufen können. Entsprechend muss dann ein relativ großer Sicherheitsabstand um die Torsionsfeder eingehalten werden. Auch die unkontrollierten Kontakte der verworfenen Torsionsfeder mit der Welle sind als nachteilig anzusehen.

Es ist daher bekannt, Abstützelemente der eingangs beschriebenen Art vorzusehen, um die Torsionsfeder in koaxialer Anordnung zu der Welle abzustützen. Hierzu werden bislang unter anderem Abstützkörper aus Kunststoff verwendet, die an dem Außendurchmesser der Welle geführt sind und den Innendurchmesser der Torsionsfeder abstützen. Da sich der Innendurchmesser einer Torsionsfeder mit Ihrer Beanspruchung ändert, das heißt um typischerweise 10 bis 20 mm verringert, muss immer ein gewisses Spiel zwischen den Abstützelementen und dem Innendurchmesser der Torsionsfeder verbleiben, um die Funktion der Torsionsfeder über ihre gesamte Länge sicherzustellen. Dies impliziert, dass ein gewisses Maß an Verwerfungen der Torsionsfeder auch auf den bekannten Abstützelementen, die einen umlaufenden oder segmentierten zylindermantelförmigen Außenumfang aufweisen, hinzunehmen ist. Für die Hersteller von Torsionsfedern ist ein weiterer wesentlicher Nachteil der bekannten Abstützelemente aus Kunststoff, dass diese Abstützelemente ohne Investition in zusätzliche Maschinen typischerweise nicht in einem Federherstellungsbetrieb hergestellt werden können und zugekauft werden müssen. Die Abstützelemente sind deshalb ein nicht unerheblicher Kostenfaktor für Federanordnungen mit einer Torsionsfeder und mindestens einem Abstützelement.

Der Erfindung liegt die Aufgabe zugrunde, ein Abstützelement der eingangs beschriebenen Art, eine Vorform hierfür und eine Federanordnung mit mindestens einem solchen Abstützelement aufzuzeigen, die eine Herstellung mit den üblichen Maschinen eines Federherstellungsbetriebs zu günstigen Kosten ermöglichen.

Erfindungsgemäß wird diese Aufgabe bei einem Abstützelement der eingangs beschriebenen Art dadurch gelöst, dass ein sich spiralförmig windender Metalldraht vorgesehen ist, der in mindestens zwei in der Haupterstreckungsrichtung der Welle voneinander beabstandeten Führungsbereichen einen auf den Außendurchmesser der Welle abgestimmten Windungsinnendurchmesser ausbildet und in mindestens einem Abstützbereich einen auf dem Innendurchmesser der Torsionsfeder abgestimmten Außendurchmesser.

Das neue Abstützelement besteht im wesentlichen aus einem sich spiralförmig windenden Metalldraht. Trotz der Spiralform des Metalldrahts handelt es sich von der Funktion her um keine Spiralfeder, auch wenn das Abstützelement eine gewisse Elastizität in Richtung der Spiralachse des Metalldrahts aufweisen kann. Im wesentlichen ist das Abstützelement formstabil. Dabei wird durch die beiden Führungsbereiche eine definierte Führung des Abstützelements und damit seines Abstützbereichs gegenüber der Welle erzielt. In dem Abstützbereich, in dem der Metalldraht so mit definiertem Abstand zu dem Außenumfang der Welle verläuft, wird der Innenumfang der Torsionsfeder auf eben diesem definierten Abstand zu dem Außenumfang der Welle gehalten. Dabei ist es im Gegensatz zum Stand der Technik bei dem neuen Abstützelement nicht gefährlich, wenn sich der Innendurchmesser der beanspruchten Torsionsfeder sogar auf ein etwas kleineres Maß verringert als der Außendurchmesser des Abstützkörpers in dem Abstützbereich, weil die Torsionsfeder in dem Abstützbereich nicht auf einer Zylindermanteloberfläche aufliegt, sondern jede Windung der Torsionsfeder typischerweise nur an einer Stelle an dem spiralförmigen Metall anliegt. Das neue Abstützelement kann mit den Maschinen hergestellt werden, wie sie typischerweise in einem Federherstellungsbetrieb zur Verfügung stehen. Dabei kann das Abstützelement als tonnenförmige Spiralfeder mit in dem Abstützbereich sehr großer Steigung und sehr hoher Federkonstante beschrieben werden. Wie bereits ausgeführt wurde, ist das neue Abstützelement in seiner gewünschten Funktion jedoch im wesentlichen formsteif.

In einer einfachen aber auch bevorzugten Ausführungsform des neuen Abstützelement ist ein Abstützbereich zwischen zwei Führungsbereichen angeordnet. Es ist aber auch denkbar, insgesamt drei oder noch mehr Führungsbereiche vorzusehen, wobei immer zwischen zwei aufeinanderfolgenden Führungsbereichen ein Abstützbereich vorgesehen ist. Bei nur einem Abstützbereich zwischen zwei Führungsbereichen können mehrere hintereinander auf der Welle angeordnete Abstützelemente zur Abstützung einer einzigen Torsionsfeder verwendet werden. Die einzelnen Abstützelemente weisen dabei relativ kompakte Abmessungen auf, was bei ihrem Transport von Vorteil ist.

Der Metalldraht, aus dem das neue Abstützelement im wesentlichen ausgebildet ist, weist eine typische Drahtstärke von 6 bis 12 mm auf, um die gewünschte Formsteifigkeit zu realisieren, die auch zum Abstützen von Torsionsfedern mit großem Innendurchmesser und großer Federdrahtstärke ausreichend ist.

In dem Abstützbereich weist der Metalldraht vorzugsweise eine relativ große Steigung von über 80 mm auf. Besonderst bevorzugt ist eine Untergrenze der Steigung von 100 mm, aber auch eine Obergrenze der Steigung von 250 mm, weil die Steigung des Metalldrahts auch den Abstützabstand der Torsionsfeder entlang jeder Parallelachse zu der Welle definiert. Dies ist beispielsweise für die Abstützung des Eigengewichts der Torsionsfeder bei horizontaler Anordnung der Welle von Bedeutung.

Der Metalldraht kann zumindest am Außenumfang des Abstützelements in dem Außenbereic:h mit einer gleitreibungsreduzierenden Beschichtung versehen sein. Allein durch die relative Drehbewegung der einzelnen Windungen der beanspruchten Torsionsfeder zueinander wird sich der Federdraht der Torsionsfeder auch immer relativ zu dem Abstützelement bewegen, selbst wenn sich dieses mit der Torsionsfeder gegenüber der Welle verdrehen kann. Insofern ist eine Reduzierung des Reibungswiderstands zwischen dem Abstützelement und der Torsionsfeder sinnvoll.

Zur Reduktion des Reibungswiderstands zwischen der Welle und dem Abstützelement, die ebenfalls wünschenswert ist, können Gleitbuchsen in den Führungsbereichen vorgesehen sein. Dann erfolgt keine unmittelbare Führung der Abstützelemente über den Metalldraht in den Führungsbereichen an dem Außendurchmesser der Welle. Vielmehr verbleibt hier ein Ringspalt, in dem die Gleitbuchsen angeordnet sind.

Es wurde bereits angesprochen, dass der Aspekt geringer Transportabmessungen des neuen Abstützelements von Interesse ist. Um besonders kompakte Transportabmessungen zu erreichen, kann eine Vorform für das Abstützelement vorgesehen sein, die eine Steigung in dem Abstützbereich von weniger als 25 mm und eine plastische Verformbarkeit aufweist, die ein axiales Auseinanderziehen der Führungsbereiche erlaubt, bis die Steigung in dem Abstützbereich dauerhaft größer als 80 mm ist. Beim axialen Auseinanderziehen der Führungsbereiche nimmt die Verformbarkeit der Vorform in dieser Richtung ab. In den Führungsbereichen kann das Abstützelement ebenso wie die Vorform jeweils eine Steigung aufweisen, die einer geblockten Anordnung der dortigen Windungen des Metalldrahts entspricht.

Bei einer Federanordnung mit einer Torsionsfeder und mindestens einem neuen Abstützelement verläuft die Steigungsrichtung der Torsionsfeder vorzugsweise gegenläufig zu der Steigungsrichtung des Metalldrahts des Abstützelements. Dies ist jedoch aufgrund der sehr stark unterschiedlichen Steigungen der Torsionsfeder und des Metalldrahts des Abstützelements nicht zwingend.

Daneben ist es bei einer Federanordnung bevorzugt, wenn die axiale Länge aller Abstützelemente, die zwischen der Welle und der Torsionsfeder angeordnet sind, größer ist als die axiale Länge der auf Block zusammengedrückten Torsionsfeder. Mit anderen Worten wird die Torsionsfeder in der neuen Federanordnung leicht auseinandergezogen. Dies stellt sicher, dass alle Federwindungen der Torsionsfeder bei ihrer Torsionsbeanspruchung gleichmäßig belastet werden.

In einer konkreten Ausführungsform einer neuen Federanordnung weist die Torsionsfeder an einem ihrer Federenden einen sich verjüngenden Innendurchmesser auf, während der Innendurchmesser an dem anderen Federende der Torsionsfeder konstant bleibt. Durch den sich verjüngenden Innendurchmesser der Torsionsfeder können Torsionsfedern, die für unterschiedliche Belastungen ausgelegt sind, mit denselben Befestigungselementen, beispielsweise an der Welle oder an einem Festelement gesichert werden. Dies ist an dem anderen Federende mit dem konstanten Innendurchmesser zwar nicht möglich. Hier besteht aber die Möglichkeit des Kürzens der Torsionsfeder, ohne dass sich hierdurch ein anderer Innendurchmesser der Torsionsfeder ergibt. Der mit einem variablen Innendurchmesser einer Torsionsfeder verbundene Zusatzaufwand ist größer als der Vorteil, der dadurch erzielt werden könnte, auch an dem anderen Federende genormter Anschlusselemente für Torsionsfedern zu verwenden, die auf unterschiedliche Belastung ausgelegt sind. Zudem würde eine an beiden Federn bezüglich ihres Innendurchmessers eingezogene Torsionsfeder es zumindest stark erschweren, die neuen Abstützelemente in ihrem Inneren anzuordnen.

Die Erfindung wird im folgenden anhand von Ausführungsbeispielen näher erläutert und beschrieben. Dabei zeigt
- Fig. 1: eine erste Ausführungsform des neuen Abstützelements,
- Fig. 2: eine zweite Ausführungsform des neuen Abstützelements angeordnet auf einer Welle,
- Fig. 3: eine Federanordnung mit einer Torsionsfeder und mehreren auf einer Welle angeordneten Abstützelementen gemäß Fig. 1,
- Fig. 4: einen schematischen Aufbau einer Vorform für das Abstützelement 1 gemäß Fig. 1 und
- Fig. 5: eine dritte Ausführungsform des neuen Abstützelements.

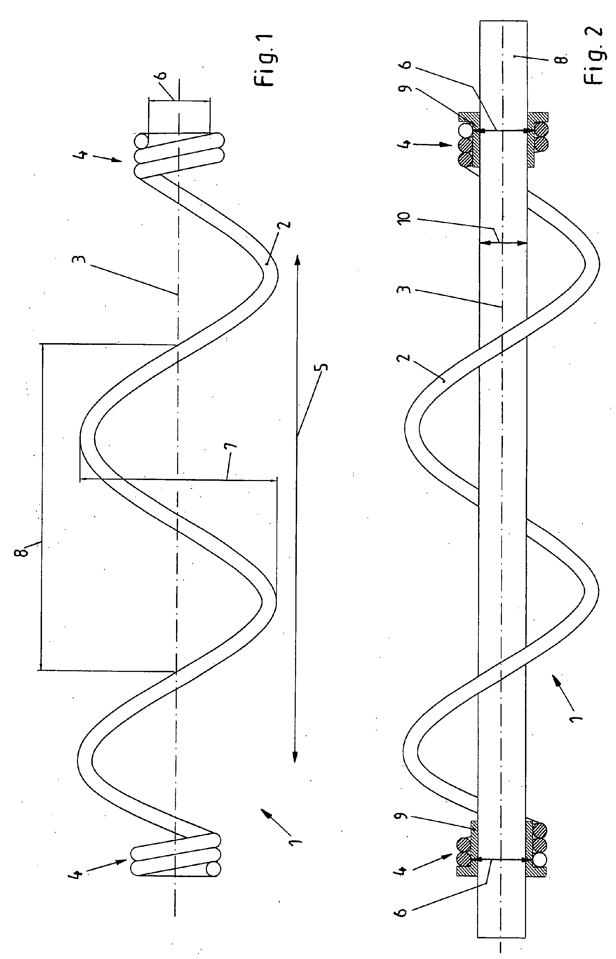

Ein in Fig. 1 dargestelltes Abstützelement 1 ist aus einem sich spiralförmig windenden Metalldraht 2 ausgebildet. Entlang einer Spiralachse 3 bildet der Metalldraht im wesentlichen drei aufeinander abfolgende Bereiche aus. Dabei handelt es sich um zwei äußere Führungsbereichs 4 und einen zwischen den Führungsbereichen 4 liegenden Abstützbereich 5. In den Führungsbereichen 4 bildet der Metalldraht 2 einen freien Windungsinnendurchmesser 6 aus, der auf dem Außendurchmesser einer hier nicht dargestellten Welle abgestimmt ist, um das Abstützelement 1 auf der Welle zu führen. In dem Abstützbereich 2 hingegen, bildet der Metalldraht 2 einen auf den Innendurchmesser einer hier ebenfalls nicht dargestellten Torsionsfeder, die auf der Welle angeordnet ist, abgestimmten Windungsaußendurchmesser 7 aus. Der Abstützbereich 2 dient dabei dazu, die Torsionsfeder an ihrem Innendurchmesser mit dem Metalldraht 2 abzustützen, um sie koaxial zu der Welle zu führen. Während der Metalldraht 2 in den Führungsbereichen 4 eine Steigung aufweist, die seiner Drahtstärke von hier 8 mm entspricht, ist die Steigung 21 in dem Abstützbereich 5 mit hier 160 mm sehr groß. D.h., sie ist viel größer als bei einer von der Drahtstärke und der Steigung her vergleichbaren Spiralfeder. Bei dem Abstützelement 1 handelt es sich auch um keine Feder. Zumindest treten seine elastischen Eigenschaften hinter seiner Formsteifigkeit, d.h. seinen Abstützungseigenschaften deutlich zurück. Das gesamte Abstützelement gemäß Fig. 1 kann dennoch mit der Vorrichtung, wie sie auch zur Herstellung von Spiralfedern verwendet werden, aus dem Metalldraht 2 ausgebildet werden.

Fig. 2 zeigt eine gegenüber Fig. 1 abgewandelte Ausführungsform des Abstützelements 1, wobei das Abstützelement 1 gemäß Fig. 2 in den Führungsbereichen 4 längs der Spiralachse 3 geschnitten dargestellt ist. Weiterhin ist in Fig. 2 auch die Welle 8 wiedergegeben. Die Modifikation des Abstützelements gemäß Fig. 2 gegenüber der Ausführungsform gemäß Fig. 1 beschränkt sich darauf, dass in den Führungsbereichen 4 Gleitbuchsen 9 aus Kunststoff vorgesehen sind, die an dem Außendurchmesser 10 der Welle 8 anliegt und ihrerseits den Windungsinnendurchmesser 6 des Metalldrahts 2 abstützen. Auf diese Weise kann die Gleitreibung zwischen dem Abstützelement 1 und der Welle 8 reduziert werden.

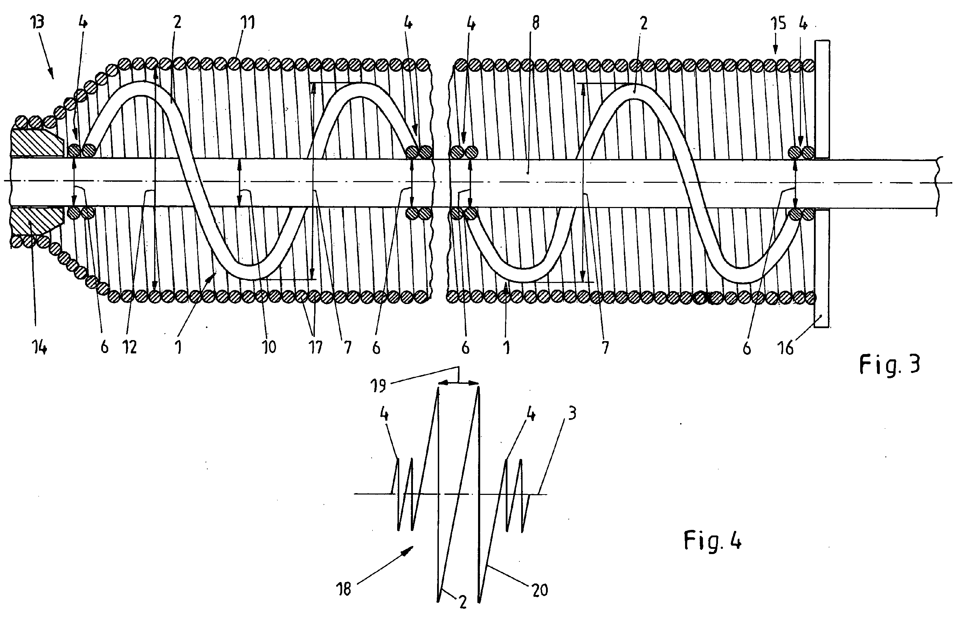

Die Federanordnung gemäß Fig. 3 umfasst mindestens zwei Abstützelemente 1 gemäß Fig. 1, die auf der Welle 8 angeordnet sind und die eine ebenfalls auf der Welle 8 angeordnete und die Abstützelemente 1 umschließende Torsionsfeder 11 an ihrem Innendurchmesser 12 abstützen. Je nach Länge der Torsionsfeder 11 können auch noch weitere Abstützelemente zwischen ihr und der Welle 8 angeordnet sein. An ihrem einen Federende 13 ist die Torsionsfeder 11 bezüglich ihres Innendurchmesser 12 soweit eingezogen, dass sie auf einen Befestigungskonus 14 passt, der drehfest auf der Welle 8 angeordnet ist und unabhängig von der Dimensionierung der Torsionsfeder 11 Verwendung finden kann, solange sie an ihrem Federende 13 immer auf dasselbe Maß eingezogen ist. An dem gegenüberliegenden Federende 15 weist die Torsionsfeder 11 einen konstanten Innendurchmesser 12 auf, d.h. sie ist dort nicht eingezogen. Dies ermöglicht es, die Torsionsfeder 11 an ihrem Federende 15 ohne Probleme bei ihrer Lagerung zu kürzen. An dem Federende 15 ist die Torsionsfeder 11 an einem ortsfesten Element 16 auf hier nicht näher dargestellte Weise befestigt. Die Welle 8 ist gegenüber dem Element 16 drehbar gelagert. Sie wird dabei durch die Torsionsfeder 11 drehelastisch abgestützt. Die Torsionsfeder 11, deren Steigungsrichtung vorzugsweise der Steigungsrichtung des Metalldrahts 2 der Abstützelemente 1 entgegengerichtet ist, wird durch die in ihr angeordneten Abstützelemente 1 vorzugsweise ein wenig auf Zug beansprucht, so dass die einzelnen Federwindungen 17 der Torsionsfeder 11 nicht unmittelbar aneinander anliegen. Auf diese Weise wird sichergestellt, dass alle Federwindungen 11 die Torsionsbeanspruchung der Torsionsfeder 11 gleichmäßig abtragen. Durch die nicht zylindermantelförmig geschlossene Oberfläche der Abstützelemente 1 ist es unproblematisch, wenn der Außendurchmesser 7 immer oder in bestimmten Beanspruchungssituationen der Torsionsfeder 11 größer ist als der Innendurchmesser 12 der Torsionsfeder. Die Torsionsfeder 11 wird dann gemäß der Steigung des Metalldrahts 2 in den Abstützbereichen 5 minimal spiralförmig verformt.

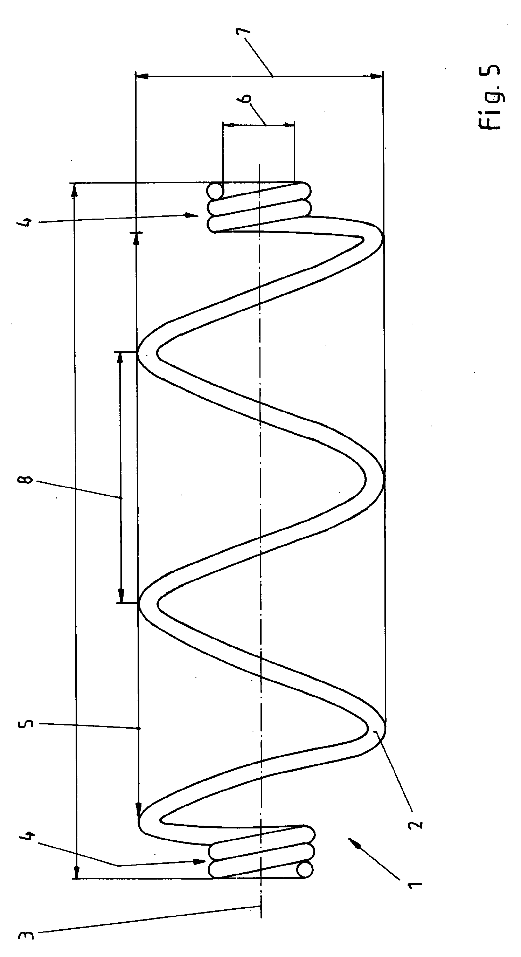

Fig. 4 zeigt stark schematisch den Aufbau einer Vorform 18 für ein Abstützelement 1 gemäß Fig. 1. Die Vorform 18 unterscheidet sich von dem fertigen Abstützelement durch eine geringere Steigung 19 in ihrem mittleren Bereich als in dem hieraus später resultierenden Abstützbereich 5 des Anschlusselements 1. Weiterhin ist ein Windungsaußendurchmesser 20 in diesem mittleren Bereich der Vorform 18 noch größer als der Windungsaußendurchmesser 7 in dem Abstützbereich 5 des fertigen Abstützelements 1. Außerdem ist die axiale Länge in Richtung der Spiralachse 3 bei der Vorform 18 noch kleiner als bei dem Abstützelement 1. Gleichzeitig weist die Vorform in dieser Richtung eine plastische Verformbarkeit auf, die es ermöglicht, die schon fertig ausgebildeten Führungsbereiche 4 in Richtung der Spiralachse 3 so auseinanderzuziehen, dass der Metalldraht 2 die für den Abstützbereich 5 gewünschte Steigung 8 beibehält. Dabei nimmt auch der Windungsauße:ndurchmesser 20 ab, bis er den Windungsaußendurchmesser 7 des Abstützelements 1 gemäß Fig. 1 erreicht. Die Vorform 18 gemäß Fig. 4 hat aufgrund ihrer kompakteren Abmessungen Vorteile beim Transport.

Die in Fig. 5 dargestellte Ausführungsform des Abstützelements unterscheidet sich von derjenigen gemäß den Fig. 1 bis 3 dadurch, dass der Abstützbereich 5 eine relativ größere axiale Ausdehnung entlang der Spiralachse 3 aufweist. Dies wird durch kürzere Übergänge von den Führungsbereichen 4 zu dem Abstützbereich 5 realisiert. Weiterhin ist die Steigung des Metalldrahts 2 in dem Abstützbereich 5 mit 120 mm kleiner gewählt, um die Torsionsfeder entlang jeder Linie parallel zu der Spiralachse 3 häufiger an ihrem Innendurchmesser abzustützen.

### BEZUGSZEICHENLISTE

- 1 -: Abstützelement
- 2 -: Metalldraht
- 3 -: Spiralachse
- 4 -: Führungsbereich
- 5 -: Abstützbereich
- 6 -: Windungsinnendurchmesser
- 7 -: Windungsaußendurchmesser
- 8 -: Welle
- 9 -: Gleitbuchsen
- 10 -: Außendurchmesser
- 11 -: Torsionsfeder
- 12 -: Innendurchmesser
- 13 -: Federende
- 14 -: Befestigungskonus
- 15 -: Federende
- 16 -: Element
- 17 -: Federwindung
- 18 -: Vorform
- 19 -: Steigung
- 20 -: Windungsaußendurchmesser
- 21 -: Steigung

## Patentansprüche

1. Abstützelement für eine auf einer Welle angeordnete spiralförmige Torsionsfeder, um die Torsionsfeder an ihrem mit Abstand zu dem Außendurchmesser der Welle verlaufenden Innendurchmesser abzustützen, **dadurch gekennzeichnet, dass** ein sich spiralförmig windender Metalldraht (2) vorgesehen ist, der in mindestens zwei in der Haupterstreckungsrichtung der Welle (8) voneinander beabstandeten Führungsbereichen (4) einen auf den Außendurchmesser (10) der Welle (8) abgestimmten Windungsinnendurchmesser (6) ausbildet und in mindestens einem Abstützbereich (5) einen auf den Innendurchmesser (12) der Torsionsfeder (11) abgestimmten Windungsaußendurchmesser (7).

2. Abstützelement nach Anspruch 1, **dadurch gekennzeichnet, dass** ein Abstützbereich (5) zwischen zwei Führungsbereichen (4) angeordnet ist.

3. Abstützelement nach Anspruch 1 oder 2, **dadurch gekennzeichnet, dass** der Metalldraht (2) eine Drahtstärke von 6 bis 12 mm aufweist.

4. Abstützelement nach einem der Ansprüche 1 bis 3, **dadurch gekennzeichnet, dass** der Metalldraht in dem Abstützbereich (5) eine Steigung (21) von 80 mm bis 250 mm aufweist.

5. Abstützelement nach einem der Ansprüche 1 bis 4, **dadurch gekennzeichnet, dass** der Metalldraht (2) zumindest am Außenumfang des Abstützelements (1) in dem Abstützbereich (5) mit einer gleitreibungsreduzierenden Beschichtung versehen ist.

6. Abstützelement nach einem der Ansprüche 1 bis 5, **dadurch gekennzeichnet, dass** in den Führungsbereichen (4) Gleitbuchsen (9) vorgesehen sind.

7. Vorform für ein Abstützelement nach einem der Ansprüche 1 bis 6, **dadurch gekennzeichnet, dass** die Vorform (18) eine Steigung (19) in dem Abstützbereich von weniger als 25 mm und eine plastische Verformbarkeit aufweist, die ein axiales Auseinanderziehen der Führungsbereiche (4) erlaubt, bis die Steigung (21) in dem Abstützbereich (5) dauerhaft größer als 80 mm ist.

8. Federanordnung mit einer Torsionsfeder und mindestens einem Abstützelement nach einem der Ansprüche 1 bis 7, **dadurch gekennzeichnet, dass** die Steigungsrichtung der Torsionsfeder (11) gegenläufig zu der Steigungsrichtung des Metalldrahts (2) des Abstützelements (1) ist.

9. Federanordnung mit einer Torsionsfeder und mindestens einem Abstützelement nach einem der Ansprüche 1 bis 7, **dadurch gekennzeichnet, dass** die axiale Länge aller Abstützelemente (1) größer ist als die axiale Länge der auf Block zusammengedrückten Torsionsfeder (11).

10. Federanordnung mit einer Torsionsfeder und mindestens einem Abstützelement nach einem der Ansprüche 1 bis 7, **dadurch gekennzeichnet, dass** die Torsionsfeder (11) an einem ihrer Federenden (13) einen sich verjüngenden Innendurchmesser (12) aufweist, während der Innendurchmesser (12) an dem anderen Federende (15) der Torsionsfeder (11) konstant bleibt.
